# EUROPÄISCHE PATENTSCHRIFT

(11) **EP 2 716 580 B1**
(45) Veröffentlichungstag und Bekanntmachung des Hinweises auf die Patenterteilung: **22.07.2015**
(21) Anmeldenummer: 13159673.6
(22) Anmeldetag: 18.03.2013
(51) Int. Cl.: B65G 23/04, B65G 23/22

(54) **Antrieb für einen Gurtförderer**
Drive for a belt conveyor
Entraînement pour un transporteur à courroie

(30) Priorität: 02.10.2012 DE 102012218065
(43) Veröffentlichungstag der Anmeldung: 09.04.2014
(73) Patentinhaber: Takraf GmbH, 04347 Leipzig (DE)
(72) Erfinder: Dilefeld, Mario, 04319 Leipzig (DE); Kahrger, Rainer, 04105 Leipzig (DE); Meinel, Marcus, 01968 Senftenberg (DE)
(74) Vertreter: Kailuweit & Uhlemann Patentanwälte Partnerschaft mbB

(56) Entgegenhaltungen:
- EP-A1- 2 492 219
- EP-A2- 1 394 431
- US-A- 4 737 136
- US-A1- 2008 141 876

## Beschreibung

Die Erfindung betrifft den Anschluss eines getriebelosen Antriebs an die Antriebstrommel eines Gurtförderers. Dieser Anschluss ist besonders für Gurtförderer geeignet, die große Massen über große Höhen transportieren, woraus hohe Beanspruchungen für den Antriebsstrang resultieren. Dabei werden unter hohen Belastungen Antriebsstränge verstanden, die Leistungen von etwa 4.000 kW und mehr zu übertragen haben.

### Stand der Technik

Gurtförderer werden bei ihrem Einsatz im Tagebau als Stetigförderer zum Transport von Massengütern wie beispielsweise Abraummaterial und mineralischen Rohstoffen verwendet. Dabei werden bei Gurtförderern mit längeren, sich über mehrere Kilometer erstreckenden und ansteigenden Förderwegen besonders hohe Anforderungen an die Leistungsfähigkeit und den Aufbaus des Antriebsstrangs gestellt.

Antriebe für Gurtförderer für Schüttgut sind in ihrer klassischen Ausführung aus "Dubbel interaktiv 2.0 "Das elektronische Taschenbuch für den Maschinenbau", Springer-Verlag Berlin Heidelberg 2002, Abschnitt U 3.2.3 Konstruktionselemente und Baugruppen für Stetigförderer unter der Überschrift "Antriebs-, Spann- und Umlenktrommeln", Bild 13 - Antriebseinheit bekannt. Die dort gezeigte Antriebseinheit besteht aus einer Getriebe-Motorkombination. Das Getriebe ist als Steckgetriebe ausgebildet, dabei reicht die Welle der Antriebstrommel in die Aufnahme des Getriebes hinein. Im Bild 15 ist eine solche Antriebstrommel dargestellt, die beiderseits durch eine Antriebseinheit in eine Drehbewegung versetzt wird. Die in Folge der hohen Belastung entstehende Verformung einer Förderbandtrommel und seiner Welle ist in Bild 14. dargestellt. Die Verformung der Welle muss durch die Lager und durch den Antrieb (entweder das Steckgetriebe oder bei einem getriebelosen Antrieb direkt durch den Motor) aufgenommen und/oder ausgeglichen (kompensiert) werden.

In der praktischen Ausführung wird als klassischer Antrieb von Gurtförderern die Getriebe-Motorkombination auf einem gemeinsamen Rahmen (Schwinge) verlagert. Eine Antriebseinheit mit einer solchen Schwingenverlagerung sind in der VDI-Richtlinie 3602 (Entwurf) "Gurtförderer für Schüttgut; Antriebe und Bauarten", vom Januar 2001, Bild 10 als bekannter Stand der Technik offenbart.

Getriebeabtrieb und Trommelwelle sind starr miteinander verbunden. Bewegungen des Antriebs, die aus den gurtzugsbedingten Verformungen der Trommelwelle im Betrieb des Förderers resultieren, werden durch eine elastische Verbindung zwischen Antriebsrahmen und umgebenden Stahlbau ausgeglichen. Im Allgemeinen wird hierfür eine flexible Drehmomentenstütze verwendet.

Werden getriebelose Antriebe eingesetzt, ist die oben beschriebene konventionelle Anordnung der Antriebskomponenten nicht möglich. Der Betrieb des Direktantriebsmotors setzt eine begrenzte Variation des Luftspalts zwischen Rotor und Stator voraus.

Bei Antrieben bis zu einer Größe von etwa 4.000 kW kann der Rotor starr mit dem Trommelwellenende verbunden werden. Der Stator umgibt den Rotor, ohne dass Motorlager zum Einsatz kommen.

Bedingung für diese technische Lösung ist eine angepasste Trommelkonstruktion, die nur minimale (gurtzugsbedingte) Verformungen des Trommelwellenendes liefert. Bei Gurttrommeln konventioneller Bauweise entstehen Konstruktionen mit großen Wellendurchmessern und hohen Eigenmassen. Übersteigt die Antriebsgröße den Grenzwert von etwa 4.000 kW so müssen, wie beispielsweise aus der Druckschrift DE 10 2010 094 207 A1 bekannt, Spezialtrommeln zum Einsatz kommen. Alternativ kann das Durchbiegungsproblem (Luftspaltproblem) dadurch gelöst werden, dass der Direktantriebsmotor mit eigenen Lagern ausgestattet wird. Eine flexible, drehstarre Kupplung ist hier erforderlich, um Motor und Antriebstrommel zu koppeln. Aufgrund der hohen zu übertragenden Drehmomente sind solche Kupplungen am Markt nicht verfügbar. EP 2492219 A1 beschreibt einen Antrieb für einen Gurtförderer gemäß dem Oberbegriff des Anspruchs 1.

### Aufgabenstellung

Der Erfindung liegt die Aufgabe zu Grunde, eine technische Lösung für den Antriebsstrang bei Direktantrieben von Gurtförderern der Größenordnung von 4.000 kW und mehr aufzuzeigen.

Diese Aufgabe wird durch einen Antrieb für einen Gurtförderer nach Anspruch 1 gelöst. Anspruch 1 beschreibt ein neues Verlagerungskonzept des Rotors des langsam laufenden Elektromotors. Dieses Verlagerungskonzept besteht aus einem Motorlager an der der Antriebstrommel abgewandten Motorseite und aus einer neuartigen Kupplung zwischen Motor und Antriebstrommel. Das Motorlager ist als Stützlager ausgeführt. Die Kupplung muss in axialer Richtung der Abtriebswelle des Elektromotors und der Antriebswelle der Antriebstrommel und in deren Auslenkung einerseits ausreichend elastisch und andererseits drehstarr sein.

Der zentrisch angeordnete Rotor des Elektromotors wird nach außen in die Richtung der Antriebstrommel als Welle weiter geführt. Das Wellenende ist als Flansch ausgebildet. Ebenso ist das zu dem Elektromotor weisende Ende der Antriebswelle der Antriebstrommel mit einer Stützscheibe versehen. Die Ausgangswelle des Elektromotors und die Antriebswelle der Antriebstrommel sind in einer gemeinsamen Drehachse angeordnet. Flansch und Stützscheibe weisen Gewinde auf, die zur beiderseitigen Befestigung einer Membranscheibe mittels Schrauben dienen. Die Schraubverbindungen mit dem Flansch und der Stützscheibe sind jeweils in gleichmäßigen Abständen zueinander kreisringförmig angeordnet, wobei beide Kreisringe unterschiedliche Durchmesser aufweisen. Die Kupplung wird so von der als Flansch ausgebildeten Verlängerung des Rotors des Elektromotors, der starr auf der Antriebswelle der Antriebstrommel angeordneten Stützscheibe, der Membranscheibe und den Schraubverbindungen gebildet. Die Eigenschaften des Stahls der Membranscheibe, die Breite ihres verformbaren Rings und ihre Dicke bestimmen die Eigenschaften der Membranwirkung. Sie werden an die jeweiligen Einsatzbedingungen angepasst, so dass die Relativbewegungen zwischen der Ausgangswelle des Elektromotors als auch der Antriebswelle der Antriebstrommel sowohl in axialer Richtung als auch der Auslenkung beider Wellen durch Ausgleichsbewegung kompensiert werden können.

Eine solche drehstarre Kupplung zusammen mit der einseitigen Lagerung des getriebelosen E-Motors eignen sich in besonderer Weise für Bandförderer hoher Leistungen, weil damit erhebliche Verformungen der Antriebstrommel auf Grund hoher Gurtzugkräfte und hoher Drehmomente des Antriebs kompensiert werden können.

### Ausführungsbeispiel

Die Erfindung wird nachstehen an Hand eines Ausführungsbeispiels naher erläutert. Die dazugehörigen Zeichnungen zeigen:
Fig. 1 eine Antriebstrommel für einen Gurtförderer hoher Leistungen mit einem Anschluss für einen Direktantrieb im Schnitt und
Fig. 2 die Verbindung des Direktantriebs mit der Welle der Antriebstrommel als Einzelheit im Schnitt.

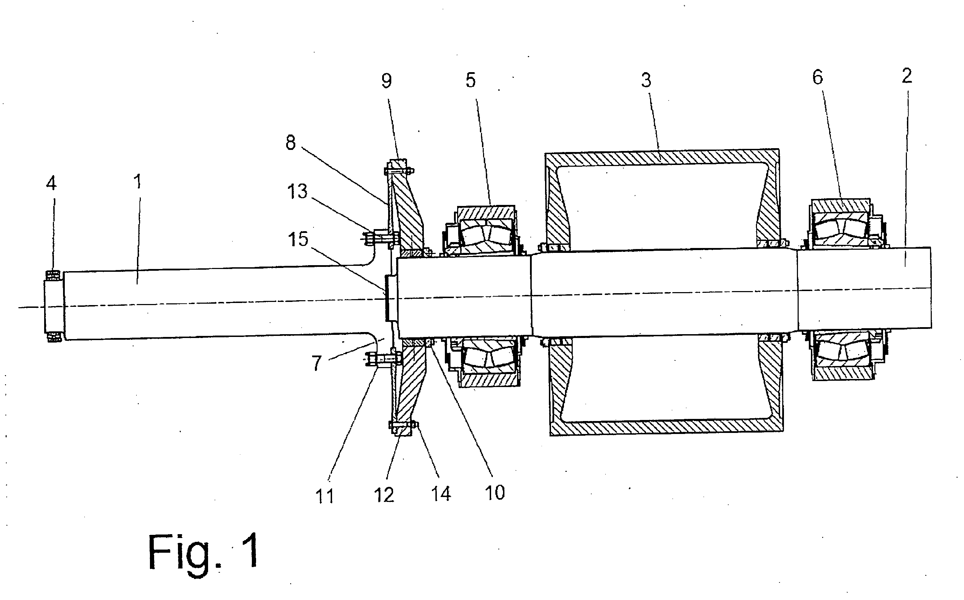

Der in beiden Zeichnungen dargestellte Trommelantrieb ist ein Direktantrieb. Als Antrieb wird ein langsam laufender Elektromotor vorgesehen. Dadurch wird kein Untersetzungsgetriebe benötigt. Nach Fig. 1 sind der Rotor 1 des Elektromotors und die Trommelwelle 2 axial zueinander angeordnet. Die Trommelwelle 2 nimmt die Antriebstrommel 3 auf. Der Rotor 1 wird außen durch ein Stützlager 4, das als Loslager ausgebildet ist, gehalten. Die Trommelwelle 2 wird durch die Trommellager 5, 6 aufgenommen, wobei das eine der beiden Trommellager 5 als Festlager und das andere Trommellager 6 als Loslager ausgebildet ist. Der Rotor 1 ist in seiner Verlängerung auf der der Antriebstrommel 3 zugewandten Seite als Flansch 7 ausgebildet und nimmt auf seiner der Antriebswelle 2 zugewandten Seite als Kupplung eine ringförmige Membran 8 auf. Als Gegenstück dazu ist die Trommelwelle 2 mit einer Stützscheibe 9 versehen. Die Stützscheibe 9 ist mittels eines Spannsatzes 10 drehstarr mit der Trommelwelle 2 verbunden. Der Flansch 7 des Rotors 1 und die Membranscheibe 8 sind durch Schraubverbindungen 11 lösbar miteinander verbunden. Ebenso bestehen eine Schraubverbindungen 12 zwischen der Membranscheibe 8 und der Stützscheibe 9. Beide Schraubverbindungen 11, 12 sind jeweils auf einem Kreisring 13, 14 angeordnet, wobei der Kreisring 13 der Rotor-Membranscheibe-Verbindung gegenüber dem Kreisring 14 der Membranscheibe-Stützscheibe-Verbindung den kleineren Durchmesser aufweist und so durch die Kreisringdifferenz die Membranwirkung eintritt. Die Eigenschaften des Stahls, die Breite des verformbaren Rings und die Dicke der Membranscheibe 8 bestimmen die Eigenschaften der Membranwirkung. Sie werden an die jeweiligen Einsatzbedingungen angepasst.

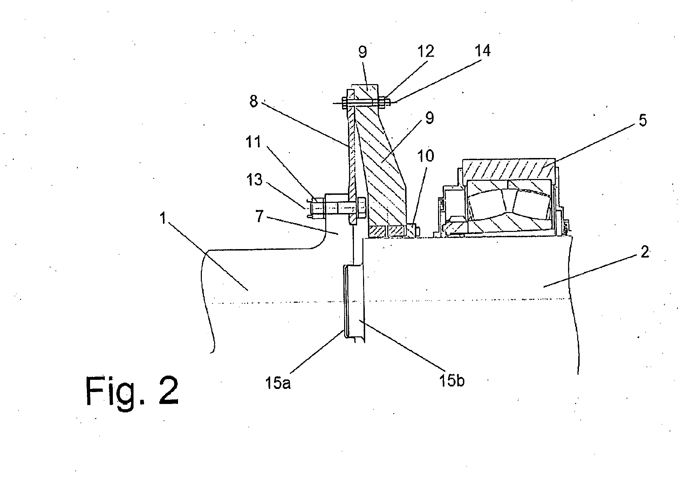

Nach den Fig. 1 und 2 ist die Drehachse zwischen Rotor 1 und der Trommelwelle 2 als Bruchstütze 15 ausgebildet. Dazu ist die Trommelwelle 2 mit einem Wellenstumpf (15b) und der Rotor 1 mit einer zylinderförmigen Ausnehmung (15a) versehen. Zwischen den Außenmaßen des Wellenstumpfs 15a und den Innenmaßen der zylinderförmigen Ausnehmung 15b ist ein Spalt vorgesehen, so dass zwischen dem Rotor 1 und der Trommelwelle 2 im Zusammenwirken mit der Membranscheibe 8 sowohl in axialer Richtung als auch in der Auslenkung beider Wellen 1, 2 eine Ausgleichsbewegung möglich ist.

## Patentansprüche

1. Antrieb für einen Gurtförderer, bestehend aus einem Motor, einer aus einer Trommelwelle (2) und einem Trommelkörper bestehenden Antriebstrommel (3), einer drehstarr zwischen der Antriebstrommel (3) und dem Ausgang des Elektromotors angeordneten Kupplung, wobei der Motor ein langsam laufender Elektromotor ist und die Trommelwelle (2) und der Ausgang des Elektromotors eine gemeinsame Drehachse aufweisen, die Trommelwelle (2) beiderseits gelagert ist, wobei der Rotor (1) des Elektromotors und die Trommelwelle (2) axial zueinander angeordnet sind, **dadurch gekennzeichnet, dass** das eine Lager der Trommelwelle (2) ein Festlager (5) und das andere Lager der Trommelwelle (2) ein Loslager (6) ist, und der Rotor (1) außen an der der Antriebstrommel (3) abgewandten Seite durch ein Stützlager (4), das als Loslager ausgebildet ist, gehalten wird und der Rotor (1) in der Verlängerung auf der der Antriebstrommel (3) zugewandten Seite als Flansch (7) ausgebildet ist, die Trommelwelle (2) an ihrem antriebseitigen Ende verdrehfest eine Stützscheibe (9) aufnimmt, wobei Flansch (7) und Stützscheibe (9) unterschiedliche Durchmesser aufweisen und zwischen dem Flansch (7) und der Stützscheibe (9) eine ringförmige Membranscheibe (8) angeordnet und jeweils lösbar mit dem Flansch (7) und der Stützscheibe (9) verbunden ist, wobei die lösbaren Verbindungen Schraubverbindungen (11, 12) sind, die jeweils in gleichmäßigen Abständen zueinander auf einem Kreisring (13, 14) angeordnet sind, wobei zwischen dem Kreisring (13) der Rotor-Membranscheibe-Verbindung (11) gegenüber dem Kreisring (14) der Membranscheibe-Stützscheibe-Verbindung (12) eine Durchmesserdifferenz vorgesehen ist und so bei verdrehstarrer Verbindung zwischen Rotor (1) und Trommelwelle (2) ein elastischer Bewegungsbereich der Membranscheibe (8) entsteht und damit durch den Flansch (7), die Membranscheibe (8) und die Stützscheibe (9) zwischen dem Elektromotor und der Antriebstrommel (3) eine Kupplung besteht.

2. Antrieb für einen Gurtbandförderer nach Anspruch 1, **dadurch gekennzeichnet, dass** die einander zugewandten Stirnseiten des verlängerten Rotors (1) und der Trommelwelle (2) einerseits mit einem Wellenstumpf (15b) und andererseits mit einer zylinderförmigen Ausnehmung (15a) versehen sind, wobei zwischen den Außenmaßen des Wellenstumpfs (15a) und den Innenmaßen der zylinderförmigen Ausnehmung (15b) ein Spalt vorgesehen ist, so dass zwischen dem Rotor (1) und der Trommelwelle (2) eine Bruchstütze entsteht und im Zusammenwirken mit der Membranscheibe (8) sowohl in axialer Richtung als auch bei einer Auslenkung beider Wellen (1, 2) eine Ausgleichsbewegung möglich ist.

## Claims

1. A drive for a belt conveyor, consisting of a motor, a drive pulley (3) consisting of a drum shaft (2) and a drum body, a coupling disposed in a torsionally rigid manner between the drive pulley (3) and the outlet of the electric motor, the motor being a slowly running electric motor and the drum shaft (2) and the outlet of the electric motor having a common axis of rotation, the drum shaft (2) being mounted on both sides, the rotor (1) of the electric motor and the drum shaft (2) being arranged axially in relation to one another, **characterised in that** one bearing of the drum shaft (2) is a fixed bearing (5) and the other bearing of the drum shaft (2) is a loose bearing (6), and that the rotor (1) is held on the outside on the side facing away from the drive pulley (3) by a support bearing (4) that is in the form of a loose bearing, and that the rotor (1) is in the form of a flange (7) in the extension on the side facing the drive pulley (3), and that the drive shaft (2) accommodates a support disc (9) non-rotatably on its drive-side end, the flange (7) and the support disc (9) having different diameters and an annular membrane disc (8) being disposed between the flange (7) and the support disc (9) and each being connected releaseably to the flange (7) and the support disc (9), the releaseable connections being screw connections (11, 12) which are each arranged spaced equally in relation to one another on a circular ring (13, 14), there being a difference in diameter between the circular ring (13) of the rotor/membrane disc connection (11) and the circular ring (14) of the membrane disc/support disc connection (12), and so an elastic movement range of the membrane disc (8) being produced by the torsionally rigid connection between the rotor (1) and the drum shaft (2), and so there being a coupling between the electric motor and the drive pulley (3) due to the flange (7), the membrane disc (8) and the support disc (9).

2. The drive for a belt conveyor according to Claim 1, **characterised in that** the face sides of the extended rotor (1) and of the drum shaft (2) that face one another are provided on the one hand with a shaft stub (15b) and on the other hand with a cylindrical recess (15a), a gap being provided between the external dimensions of the shaft stub (15a) and the internal dimensions of the cylindrical recess (15b) so that breakage support is produced between the rotor (1) and the drum shaft (2) and an equalizing movement is possible in cooperation with the membrane disc (8), both in the axial direction and with a deflection of the two shafts (1, 2).

## Revendications

1. Entraînement pour un transporteur à courroie, composé d'un moteur, d'un tambour d'entraînement (3) composé d'un arbre de tambour (2) et d'un corps de tambour, d'un accouplement disposé de manière solidaire en rotation entre le tambour d'entraînement (3) et la sortie du moteur électrique, le moteur étant un moteur électrique à vitesse lente et l'arbre de tambour (2) et la sortie du moteur électrique présentant un axe de rotation commun, l'arbre de tambour (2) étant monté des deux côtés, le rotor (1) du moteur électrique et l'arbre de tambour (2) (2) étant disposés axialement l'un par rapport à l'autre, **caractérisé en ce qu'**un palier de l'arbre de tambour (2) est un palier fixe et l'autre palier de l'arbre de tambour (2) est un palier libre, et le rotor (1) est maintenu extérieurement du côté éloigné du tambour d'entraînement (3) par un palier d'appui (4) réalisé sous la forme d'un palier libre et le rotor (1) est réalisé sous la forme d'une bride (7) dans le prolongement du côté tourné vers le tambour d'entraînement (3), l'arbre de tambour (2) reçoit à son extrémité côté entraînement un disque d'appui (9) de manière solidaire en rotation, la bride (7) et le disque d'appui (9) présentant des diamètres différents et un disque membrane annulaire (8) étant disposé entre la bride (7) et le disque d'appui (9) et relié chaque fois de manière libérable à la bride (7) et au disque d'appui (9), les liaisons libérables étant des liaisons vissées (11, 12) qui sont disposées chaque fois à intervalles réguliers les unes des autres sur un anneau de cercle (13, 14), une différence de diamètre étant prévue entre l'anneau de cercle (13) de la liaison rotor-disque membrane (11) par rapport à l'anneau de cercle (14) de la liaison disque membrane-disque d'appui (12) et une plage de mouvement élastique du disque membrane (8) étant ainsi produite en cas de liaison solidaire en rotation entre le rotor (1) et l'arbre de tambour (2), et un accouplement existant de ce fait par la bride (7), le disque membrane (8) et le disque d'appui (9) entre le moteur électrique et le tambour d'entraînement (3).

2. Entraînement pour un transporteur à courroie selon la revendication 1, **caractérisé en ce que** les faces frontales tournées l'une vers l'autre du rotor (1) prolongé et de l'arbre de tambour (2) sont pourvues d'une part d'un bout d'arbre (15b) et d'autre part d'un évidement cylindrique (15a), un jeu étant prévu entre les dimensions extérieures du bout d'arbre (15a) et les dimensions intérieures de l'évidement cylindrique (15b), de sorte qu'il se forme un appui de rupture entre le rotor (1) et l'arbre de tambour (2) et qu'un mouvement de compensation est possible en coopération avec le disque membrane (8) aussi bien dans la direction axiale que lors d'une déviation des deux arbres (1, 2).
